# EUROPÄISCHE PATENTSCHRIFT

(11) **EP 3 280 611 B1**
(45) Veröffentlichungstag und Bekanntmachung des Hinweises auf die Patenterteilung: **26.06.2019**
(21) Anmeldenummer: 16717109.9
(22) Anmeldetag: 31.03.2016
(51) Int. Cl.: B60N 2/02, B60N 2/22, B60N 2/90, B60N 2/68

(54) **FAHRZEUGSITZ MIT IN SICH VERDREHBARER BZW. TORDIERBARER RÜCKENLEHNE UND SCHALTBARER GETRIEBEEINHEIT FÜR DIE AUFTEILUNG EINES ANTRIEBSMOMENTS ZWISCHEN ZWEI LEHNENLÄNGSSEITEN**
VEHICLE SEAT WITH TWISTABLE BACKREST AND SHIFTABLE GEAR UNIT FOR THE SPLITTING OF A DRIVE COUPLE BETWEEN TWO LONGITUDINAL BACKREST SIDES
SIÈGE DE VÉHICULE AVEC DOSSIER APTE À LA TORSION ET UNITÉ DE TRANSMISSION CAPABLE DE COMMUTER POUR RÉPARTITION D'UN COUPLE D'ENTRAINEMENT ENTRE DEUX CÔTÉS LONGITUDINALES DU DOSSIER

(30) Priorität: 08.04.2015 DE 102015206277
(43) Veröffentlichungstag der Anmeldung: 14.02.2018
(73) Patentinhaber: Audi AG, 85045 Ingolstadt (DE)
(72) Erfinder: TREICHL, Markus, 96484 Meeder (DE); HÖPPEL, Michael, 96231 Bad Staffelstein (DE); BEYERSDORFER, Hartmut, 96450 Coburg (DE); MERGL, Christian, 97475 Zeil/Main (DE); HOFMANN, Jochen, 96257 Marktgraitz (DE); LAUER, Christoph, 85051 Ingolstadt (DE); LORENZ, Stephan, 80939 München (DE)
(74) Vertreter: Maikowski & Ninnemann Patentanwälte Partnerschaft mbB
(86) Internationale Anmeldenummer: PCT/EP2016/057062
(87) Internationale Veröffentlichungsnummer: WO 2016/162259

(56) Entgegenhaltungen:
- WO-A1-02/102203
- DE-A1-102010 001 025
- DE-A1-102012 104 588
- DE-U1-202013 011 803
- JP-A- 2011 098 726

## Beschreibung

Die vorliegende Erfindung betrifft einen Fahrzeugsitz nach dem Oberbegriff des Anspruchs 1.

Ein derartiger Fahrzeugsitz weist insbesondere ein eine Sitzfläche definierendes Sitzuntergestell und eine Rückenlehne auf, wobei sich die Rückenlehne entlang einer Lehnenlängsachse erstreckt. Diese Lehnenlängsachse verläuft in einer Gebrauchsposition der Rückenlehne, in der eine Person bestimmungsgemäß auf dem Fahrzeugsitz Platz nehmen kann, unter einem Lehnenwinkel zu der Sitzfläche. Die Rückenlehne erstreckt sich hierbei also beispielsweise unter einem gegebenenfalls einstellbaren Lehnenwinkel von 60 bis 120 Grad zu der Sitzfläche. Üblicherweise befindet sich die Rückenlehne somit in einer bestimmungsgemäßen Gebrauchsposition in einer aufrechten oder aufgerichteten Lage bezüglich der Sitzfläche, sodass eine Person auf dem Fahrzeugsitz bequem Platz nehmen kann und an ihrem Rücken durch die Rückenlehne abgestützt ist.

Zur Minimierung eines Verletzungsrisikos für einen auf dem Fahrzeugsitz befindlichen Fahrzeuginsassen sind regelmäßig insbesondere das Sitzuntergestell und ein Lehnenrahmen der Rückenlehne vergleichsweise steif ausgelegt und aneinander arretiert, sodass der Fahrzeugsitz den Fahrzeuginsassen in einer gewünschten Sitzposition hält und abstützt. Zur Einstellung der gewünschten Sitzposition ist regelmäßig die Neigung der Rückenlehne relativ zu der Sitzfläche einstellbar und/oder das Sitzuntergestell über eine Schienenanordnung längsverschieblich.

Um einen Fahrzeuginsassen ferner in einer bestimmten Sitzposition an dem Fahrzeugsitz auch in einem Crash-Fall zu halten, ist in dem Fahrzeug ein Sicherheitsgurtsystem für den jeweiligen Fahrzeugsitz vorgesehen. Ein Sicherheitsgurt mit einer in ein Gurtschloss an dem Fahrzeugsitz einzusteckenden Gurtlasche ist hierbei häufig an einem Karosserieteil des Fahrzeugs vorgesehen, z.B. bei einem Fahrersitz im Bereich der B-Säule des Fahrzeugs. Hierbei kann nun die Schwierigkeit auftreten, dass der durch den Sitzbenutzer zum Anschnallen zu ergreifende Sicherheitsgurt in der gewünschten Sitzposition von dem Fahrzeugsitz aus nur schwer erreichbar ist. So kann sich der Sicherheitsgurt beispielsweise bezogen auf die Fahrtrichtung des Fahrzeugs hinter der aufgerichteten Rückenlehne befinden, sodass der Sitzbenutzer diesen nur unter erheblicher Anstrengung erreichen kann. Grundsätzlich gäbe es zwar die Möglichkeit bei einer in ihrer Neigung verstellbaren Rückenlehne und einem längsverschieblichen Fahrzeugsitz die Rückenlehne so weit nach hinten zu neigen und gleichzeitig den Fahrzeugsitz so weit nach hinten zu verschieben, dass der Sicherheitsgurt leicht ergriffen und sich angeschnallt werden kann. Erst anschließend würde dann die gewünschte Sitzposition eingestellt. Ist ein solches Vorgehen für einen Fahrzeuginsassen aber notwendig, um sich bequem anschnallen zu können, empfindet ein Fahrzeuginsasse dies erfahrungsgemäß als störend und wenig praktikabel. Die Anordnung des Sicherheitsgurtes und des Fahrzeugsitzes innerhalb des Fahrzeuges wird zwar in der Praxis so vorgenommen, dass zumindest für einen durchschnittlichen Fahrzeuginsassen der Sicherheitsgurt noch komfortabel erreichbar ist. Je nach eingestellter Sitzposition und Größe des jeweiligen Sitzbenutzers bleibt eine solche Anordnung beim Anschnallen aber weiterhin nachteilig.

Ferner ist es auch während der Fahrt, z.B. für einen Beifahrer, häufig schwierig, angeschnallt Gegenstände zu erreichen, die sich auf einem Rücksitz des Fahrzeugs befinden. So ist auch das Erreichen eines auf einem Rücksitz befindlichen Kindes von einem Beifahrer- oder Fahrersitz aus äußerst schwierig, insbesondere wenn der jeweilige Sitzbenutzer angeschnallt ist.

Aus der DE 10 2010 001 025 A1 ist bekannt an den zwei Lehnenlängsseiten einer Rückenlehne eines Fahrzeugsitzes jeweils eine eigene Antriebseinheit mit einem Antriebsmotor vorzusehen und diese beiden Antriebseinheiten über eine elektronische oder mechanische Synchronisierungsvorrichtungen miteinander zu synchronisieren.

Hierbei ist in einer Ausführungsvariante vorgeschlagen, die beiden Antriebseinheiten so betreiben zu können, dass nur eine tunnelseitige oder nur türseitige Antriebseinheit betätigt wird, wodurch eine Verdrehung der Rückenlehne um ihre Lehnenlängsachse vorgenommen wird. Die in der DE 10 2010 001 025 A1 vorgeschlagene Lösung mit zwei synchronisierten Antriebseinheiten ist jedoch vergleichsweise mit einem hohen Gewicht und hohen Kosten verbunden.

Es ist daher Aufgabe der vorliegenden Erfindung, einen Fahrzeugsitz in dieser Hinsicht zu verbessern und insbesondere eine vergleichsweise kostengünstige Möglichkeit bereitzustellen, das Anschnallen für einen Fahrzeuginsassen komfortabler zu gestalten, ohne hierbei das Gewicht des Fahrzeugsitzes deutlich zu erhöhen.

Diese Aufgabe wird mit einem Fahrzeugsitz nach Anspruch 1 gelöst.

Erfindungsgemäß ist dabei vorgesehen, dass der Fahrzeugsitz eine fremdkraftbetätigte Antriebseinrichtung mit genau einer - vorzugsweise elektromotorischen - Antriebseinheit umfasst, die eine fremdkraftbetätigte Verdrehung oder Verwindung der in der Gebrauchsposition befindlichen Rückenlehne bezüglich ihrer Lehnenlängsachse gestattet, wobei dann eine Lehnenlängsseite der Rückenlehne stärker (bezogen auf eine Fahrzeuglängsachse) nach hinten geneigt ist als die andere, gegenüberliegende Lehnenlängsseite. Die sich gegenüberliegenden Lehnenlängsseiten verlaufen somit bei einer mittels der Antriebseinrichtung vorgenommenen Verdrehung der Rückenlehne nicht mehr zueinander parallel. Für die Verdrehung der Rückenlehne bezüglich ihrer Lehnenlängsachse mittels einer einzelnen Antriebseinheit weist die Antriebseinrichtung erfindungsgemäß wenigstens eine schaltbare Getriebeeinheit auf, mittels der ein von der Antriebseinheit erzeugtes Antriebsmoment zwischen den Lehnenlängsseiten aufteilbar ist.

Die Aufteilung des Antriebsmoments kann hierbei insbesondere bedeuten, dass über die Getriebeeinheit an eine Lehnenlängsseite 100% und an die andere Lehnenlängsseite 0% des Antriebsmoments übertragen werden.

Auf Basis der erfindungsmäßen Lösung ist es somit möglich, dass tür- und tunnelseitige Lehnenlängsseiten der Rückenlehne bei Bedarf fremdkraftbetätigt, d.h., beispielsweise mithilfe eines Elektromotors, unabhängig voneinander und damit insbesondere auch asynchron zueinander verstellt werden können. Derart ist die Rückenlehne z.B. nicht nur vorwärts und rückwärts bezüglich des Sitzuntergestells schwenkbar, sondern kann auch gezielt seitlich verdreht werden. Die Lehnenverstellung erhält hierdurch einen zusätzlichen Freiheitsgrad und ermöglicht eine bessere Anpassbarkeit der Lehnenposition an die verschiedenen Bedürfnisse eines Fahrzeuginsassen. Zudem wird der Komfort gesteigert.

So kann mit der erfindungsgemäßen Lösung nicht nur die Erreichbarkeit eines Sitzgurtes beim Anschnallen oder die Zugänglichkeit eines Rücksitzes von einem vorderen Fahrzeugsitz aus erleichtert werden. Vielmehr ist damit z.B. auch eine gezielte Entlastung der Rückenmuskulatur bei längeren Fahrten oder eine Vorbeugung von Ermüdungserscheinungen bei einem Fahrer des Fahrzeugs möglich. Insbesondere in den zuletzt genannten Fällen kann die Rückenlehne beispielsweise über die Antriebseinrichtung lediglich gezielt geringfügig bezüglich der Lehnenlängsachse verdreht werden. Hierbei kann vorgesehen sein, dass über die Antriebseinrichtung eine - vorzugsweise stufenlose - Verdrehung oder Verwindung der Rückenlehne je nach Betriebssituation in unterschiedlichem Maße vorgenommen wird, z.B. je nachdem, ob die Verdrehung z.B. der besseren Erreichbarkeit des Sicherheitsgurtes oder des Rücksitzes dient oder der Entlastung der Wirbelsäule und/oder der Vorbeugung von Ermüdungserscheinungen.

In einer Ausführungsvariante kann demgemäß vorgesehen sein, dass über eine Steuerelektronik der Antriebseinrichtung das Maß einer zulässigen oder vorgenommenen Verdrehung oder Verwindung der Rückenlehne davon abhängt, ob das Fahrzeug steht oder das Fahrzeug gestartet wurde oder bereits fährt.

Unter einer Gebrauchsposition der Rückenlehne wird im Übrigen grundsätzlich eine Position verstanden, in der eine Person bestimmungsgemäß auf dem Fahrzeugsitz Platz nehmen kann und die Lehnenlängsachse unter einem Lehnenwinkel, typischerweise im Bereich von 60 Grad bis 120 Grad, zu der Sitzfläche verläuft. Die Rückenlehne befindet sich somit in einer Gebrauchsposition regelmäßig bezogen auf die Sitzfläche in einer aufrechten oder aufgerichteten Lage.

Selbstverständlich kann die Rückenlehne an dem Sitzuntergestell um eine Schwenkachse relativ zu der Sitzfläche verschwenkbar sein, um die Rückenlehne relativ zu der Sitzfläche in ihrer Neigung einstellen und/oder in eine Nicht-Gebrauchsposition auf die Sitzfläche vorklappen zu können. Die Rückenlehne ist hierfür typischerweise beiderseits einer zu der Lehnenlängsachse parallelen Mittelachse der Rückenlehne an dem Sitzuntergestell verschwenkbar gelagert. Durch die Mittelachse wird die Rückenlehne in zwei Lehnenlängsseiten (virtuell) geteilt. In einer Ausführungsform fallen die Lehnenlängsachse, bezüglich der in einem unverriegelten Zustand der Verriegelungsvorrichtung eine Verdrehung oder Verwindung der Rückenlehne ermöglicht ist, und die Mittelachse der Rückenlehne zusammen. Eine in einer Gebrauchsposition befindliche und vorzugsweise bezüglich Ihrer Neigung bezüglich der Sitzfläche einstellbare und verschwenkbare Rückenlehne wird somit erfindungsgemäß nicht vollständig um eine querverlaufende Schwenkachse relativ zu der Sitzfläche verschwenkt, sondern in sich bezüglich einer Lehnenlängsachse verdreht, beispielsweise um die Erreichbarkeit eines Sicherheitsgurtes zu erleichtern oder die Wirbelsäule während einer Fahrt zu entspannen.

Für die verschwenkbare Lagerung der Rückenlehne relativ zu der Sitzfläche kann beispielsweise beiderseits der Mittelachse jeweils ein (Dreh-)Beschlag vorgesehen sein. Über diesen Beschlag wird ein Verschwenken der Rückenlehne um die Schwenkachse gestattet und kann die Rückenlehne in einer Gebrauchsposition arretiert werden.

Wie zuvor erläutert ist in einer Ausführungsvariante vorgesehen, dass über die Antriebseinrichtung eine Lehnenlängsseite der Rückenlehne unabhängig von der anderen Lehnenlängsseite um die Schwenkachse an dem Sitzuntergestell verschwenkt werden kann.

Die Antriebseinrichtung wirkt mit den zwei (Lehnen-) Beschlägen des Fahrzeugsitzes vorzugsweise über wenigstens zwei Übertragungsglieder zusammen, die jeweils mit der Getriebeeinheit verbunden sind. Über die Übertragungsglieder ist jeweils eine Verstellkraft an die Lehnenbeschläge übertragbar, sodass bei Bedarf voneinander unabhängig, fremdkraftbetätigte Verstellungen der Lehnenlängsseiten um die Schwenkachse erfolgen können. Die Übertragungsglieder können jeweils wenigstens eine Querwelle umfassen, die sich von der Getriebeeinheit zu einem Lehnenbeschlag erstreckt. Die Querwelle kann hierbei teilweise oder vollständig hohl ausgestaltet sein, um Gewicht zu sparen.

Je nach Ausführungsvariante ist über die schaltbare Getriebeeinheit wahlweise, d.h., z.B. je nach Schaltstellung der Getriebeeinheit:
- eine synchrone Verstellung beider Lehnenlängsseiten oder nur eine Verstellung einer Lehnenlängsseite alleine ermöglicht oder
- eine synchrone Verstellung beider Lehnenlängsseiten oder eine Verstellung beider Lehnenlängsseiten mit unterschiedlichen Drehzahlen und/oder in unterschiedlichen Drehrichtungen ermöglicht oder
- eine synchrone Verstellung beider Lehnenlängsseiten, nur eine Verstellung einer Lehnenlängsseite alleine oder eine Verstellung beider Lehnenlängsseiten mit unterschiedlichen Drehzahlen und/oder in unterschiedlichen Drehrichtungen ermöglicht.

Die Getriebeeinheit kann folglich in zwei oder drei oder mehr Schaltstufen schaltbar sein, um unterschiedliche Verstellung der Lehnenlängsseiten über eine einzelne Antriebseinheit zu ermöglichen. So kann beispielsweise die Getriebeeinheit schaltbar sein, um wahlweise beide Lehnenlängsseiten synchron zueinander zu verstellen, nur eine Lehnenlängsseite alleine zu verstellen und beide Lehnenlängsseiten mit unterschiedlichen Drehzahlen und/oder in unterschiedliche Drehrichtungen zu verstellen. Im Fall der Verstellung mit unterschiedlichen Drehzahlen erfolgt über die Getriebeeinheit beispielsweise eine ungleiche Verteilung des durch die Antriebseinheit erzeugten Antriebsmoments, sodass die beiden Lehnenlängsseiten letztlich mit unterschiedlichen Geschwindigkeiten in dieselbe Drehrichtung um die gemeinsame Schwenkachse geschwenkt werden.

In einem Ausführungsbeispiel ist die Antriebseinheit eingerichtet, stets an eine der beiden Lehnenlängsseiten eine Verstellkraft zu übertragen. Über die Getriebeeinheit erfolgt hier bei Bedarf lediglich eine Kopplung mit der anderen Lehnenlängsseite, sodass beide Lehnenlängsseiten hierüber gemeinsam - vorzugsweise synchron - verstellbar sind. Die Getriebeeinheit ist folglich in einer Grundstellung so geschaltet, dass über die einzelne Antriebseinheit nur eine Verstellung einer Lehnenlängsseite, beispielsweise der türseitigen Lehnenlängsseite erfolgt. Wünscht ein Sitzbenutzer eine Neigungsänderung der Rückenlehne relativ zu dem Sitzuntergestell, erfolgt eine Betätigung der Getriebeeinheit, die dann die Antriebseinheit mit beiden Lehnenlängsseiten koppelt, sodass beide Lehnenlängsseiten gemeinsam verstellt werden. Die einzelne Antriebseinheit kann in dieser Ausführungsvariante somit von einer Lehnenlängsseite nicht entkoppelt werden und ist mit dieser bzw. einem zugeordneten Lehnenbeschlag "starr" verbunden. Über die Getriebeeinheit kann somit lediglich bei Bedarf eine Kopplung der Antriebseinheit mit der anderen Lehnenlängsseite erfolgen, um auch an diese eine Verstellkraft zu übertragen.

Eine alternative Ausführungsvariante sieht demgegenüber vor, dass die Antriebseinheit eingerichtet ist, an beide Lehnenlängsseiten eine Verstellkraft zu übertragen, sodass über die Getriebeeinheit bei Bedarf letztlich nur eine Entkopplung einer Lehnenlängsseite von der Antriebseinheit erfolgen kann, um ein Antriebsmoment der Antriebseinheit nur zur Verstellung einer der Lehnenlängsseiten zu nutzen. Hier wird in einer Grundstellung der Getriebeeinheit folglich ein Antriebsmoment der Antriebseinheit zu gleichen Teilen auf beide Lehnenlängsseiten aufgeteilt, um vorzugsweise eine synchrone Verstellung beider Lehnenlängsseiten bei Betätigung der Antriebseinheit zu bewirken. Erst durch entsprechende aktive Schaltung der Getriebeeinheit kann hier erreicht werden, dass nur eine der Lehnenlängsseiten relativ zu der anderen Lehnenlängsseite verstellt und um die gemeinsame Schwenkachse verschwenkt wird. Die beiden Lehnenlängsseiten sind somit nicht bei Bedarf miteinander koppelbar, sondern bei Bedarf voneinander entkoppelbar, sodass ein Antriebsmoment nur noch an eine der beiden Lehnenlängsseiten übertragen wird.

Die Getriebeeinheit kann beispielsweise mechanisch, z.B. über einen Federspeicher, in eine bestimmte Grundstellung vorbelastet sein, in die die Getriebeeinheit stets selbsttätig wechselt, wenn beispielsweise kein entsprechendes Steuersignal an der Getriebeeinheit anliegt. Die Grundstellung der Getriebeeinheit wird somit beispielsweise auch eingenommen, wenn eine Energieversorgung zu der Antriebseinrichtung unterbrochen wird.

In einer möglichen Weiterbildung ist die Getriebeeinheit an einer Lehnenlängsseite angeordnet und zwischen einer Übertragungsstellung und einer Lehrlaufstellung schaltbar. In der Übertragungsstellung der Getriebeeinheit führt eine Verstellkraft, die von der Antriebseinheit an die die Getriebeeinheit aufweisende Lehnenlängsseite mittels eines Übertragungsgliedes der Antriebseinrichtung übertragen wird, zu einem Verschwenken eines diese Lehnenlängsseite definierenden Lehnenseitenteils der Rückenlehne. In der Leerlaufstellung wiederum führt ein Antriebsmoment der Antriebseinheit lediglich zu einer Verstellung dieses Übertragungsgliedes, ohne dass das Lehnenseitenteil verstellt wird. In diesem Ausführungsbeispiel wird folglich beispielsweise eine zu der Getriebeeinheit führende Querwelle als Übertragungsglied stets mitgedreht, wenn die Antriebseinheit betätigt wird. Über die Getriebeeinheit ist jedoch letztlich schaltbar, ob ein Drehmoment der Querwelle auch in den jeweils zugeordneten Lehnenbeschlag eingekoppelt wird, um ein tunnelseitiges oder türseitiges Lehnenseitenteil um die Schwenkachse zu schwenken.

In einer Ausführungsvariante können auch wenigstens zwei Getriebeeinheiten vorgesehen sein, die unterschiedlichen Lehnenlängsseiten zugeordnet und jeweils eingerichtet sind, bei Bedarf die jeweilige Lehnenlängsseite von der Antriebseinheit zu entkoppeln oder mit dieser zu koppeln. Diese Weiterbildung geht zum Beispiel von einer Grundform aus, bei der die Antriebseinheit - wie bisher üblich - eingerichtet ist, beide Lehnenlängsseiten synchron miteinander zu verstellen. Über zwei jeweils einer Lehnenlängsseite zugeordneten und beispielsweise mit einem tunnelseitigen oder türseitigen Lehnenbeschlag gekoppelten Getriebeeinheiten kann dann aber separat schaltbar sein, ob ein von der Antriebseinheit erzeugtes Antriebsmoment auch tatsächlich in den jeweiligen Lehnenbeschlag zum Schwenken des jeweiligen Lehnenseitenteils eingekoppelt wird.

Unabhängig von der jeweiligen Ausführungsvariante kann vorgesehen sein, dass die Getriebeeinheit von der Antriebseinheit räumlich getrennt an dem Fahrzeugsitz angeordnet ist. Bei der schaltbaren Getriebeeinheit kann es sich folglich um eine räumlich separate und vorzugsweise gesondert ansteuerbare Einheit handeln, die nicht in eine Antriebseinheit integriert ist. Gleichwohl kann die mit der schaltbaren Getriebeeinheit zusammenwirkende Antriebseinheit selbst als Motor-Getriebeeinheit ausgeführt sein.

Die Antriebseinheit kann an einer Lehnenlängsseite angeordnet sein. In einem Ausführungsbeispiel ist dann die Übertragung des Antriebsmoments oder eines Teils hiervon an die andere Lehnenlängsseite nur über die hierzu räumlich beabstandet angeordnete Getriebeeinheit hinweg möglich.

In einem Ausführungsbeispiel ist die Getriebeeinheit zwischen zwei Lehnenseitenteilen der Rückenlehne angeordnet. Beispielsweise befindet sich die Getriebeeinheit in etwa mittig bezogen auf eine Querrichtung oder die hierzu parallel verlaufende Schwenkachse des Fahrzeugsitzes, um die die Rückenlehne relativ zu dem Sitzuntergestellt verschwenkbar ist, zwischen den Lehnenseitenteilen. Ein Lehnenseitenteil definiert hierbei jeweils einen türseitigen oder tunnelseitigen bzw. rechten oder linken Teil eines Lehnenrahmens der Rückenlehne. Beispielsweise weist ein Lehnenseitenteil hierfür einen Lehnenholm auf.

In einem Ausführungsbeispiel ist die Getriebeeinheit an einer Außenseite eines Lehnenseitenteils der Rückenlehne angeordnet. So kann hier die Getriebeeinheit als separat hergestellte Einheit von außen an einen Lehnenbeschlag montiert sein, um diesen lediglich bei Bedarf mit der elektromotorischen Antriebseinheit der Antriebseinrichtung zu koppeln oder zu entkoppeln.

Die Getriebeeinheit kann beispielsweise eine schaltbare Reibkupplung umfassen. Andere schaltbare Kupplungen sind selbstverständlich ebenfalls möglich.

Im Übrigen kann die erfindungsgemäß vorgesehene fremdkraftbetätigte Verdrehung der in der Gebrauchsposition befindlichen Rückenlehne bezüglich ihrer Lehnenlängsachse für die Erleichterung des Ein- und/oder Ausstiegs aus einem Fahrzeug vorgesehen sein, für die Erleichterung des Erreichens eines Gurtes (vorzugsweise im Bereich der Schulter eines Sitzbenutzers) und/oder für die Bereitstellung einer Massagefunktion an dem Fahrzeugsitz. Bei einer Massagefunktion werden beispielsweise beide Lehnenlängsseiten abwechselnd in unterschiedliche Drehrichtungen um kleine Drehwinkel verschwenkt. Alternativ oder ergänzend kann eine Verdrehung der Rückenlehne bezüglich ihrer Lehnenlängsachse mittels der schaltbaren Getriebeeinheit auch auf Basis von Steuersignalen eines Fahrerassistenzsystems erfolgen.

Eine Steuerelektronik für die Antriebseinrichtung, mittels der eine von einer Antriebseinheit aufgebrachtes Antriebsmoment bzw. eine hiermit ausgeübte Verstellkraft steuerbar ist, gestattet in einem Ausführungsbeispiel eine selbsttätige Verdrehung der Rückenlehne und/oder eine Verdrehung in Reaktion auf ein von einem Sitzbenutzer ausgelöstes Bedienereignis. Im erstgenannten Fall erfolgt eine fremdkraftbetätigte Verdrehung über die Antriebseinrichtung beispielsweise automatisch, um die Wirbelsäule während einer längeren Fahrt zu entlasten oder eine Ermüdung des Sitzbenutzers vorzubeugen. Im zuletzt genannten Fall löst der Sitzbenutzer bewusst eine Verdrehung der Rückenlehne, z. B. durch Betätigen eines Bedienelements, wie einem Schalter oder einem Bedienfeld eines Displays aus.

Ein Bedienereignis, das zu einer Verdrehung der Rückenlehne um ihre Lehnenlängsachse führt, kann aber auch ohne Betätigen eines Bedienelementes ausgelöst werden, z. B. indem über an oder in dem Fahrzeugsitz vorgesehene Sensoren ein Benutzerwunsch zur Verdrehung der Rückenlehne erkannt wird. Beispielsweise kann wenigstens ein Drucksensor vorgesehen sein, mittels dem ein (stärkeres) Drücken eines Sitzbenutzers gegen einen (rechten oder linken) Teil der Rückenlehne bzw. gegen eine der beiden Lehnenlängsseiten detektiert wird. Infolge dieses (stärkeren) Drückens schließt eine Auswertelogik der Steuerelektronik auf das Bemühen eines Sitzbenutzers, einen Sicherheitsgurt zu ergreifen, oder allgemein auf einen Bedienerwunsch zur Verdrehung der Rückenlehne, um eine veränderte Sitzposition einnehmen zu können. Hierbei ist folglich eine Sensoreinrichtung vorgesehen, die ein Drücken eines Sitzbenutzers gegen eine der beiden Lehnenlängsseiten bzw. ein (stärkeres) Drücken eines Sitzbenutzers gegen einen der beiden (rechten oder linken) Teile der Rückenlehne als Bedienereignis erkennt und bewertet, um eine Verdrehung der Rückenlehne bezüglich ihrer Lehnenlängsachse auszulösen.

Alternativ oder ergänzend kann an einem erfindungsgemäßen Fahrzeugsitz eine Antriebseinrichtung vorgesehen sein, mittels der eine bezüglich der Lehnenlängsachse verdrehte Rückenlehne fremdkraftbetätigt in eine Normallage verstellbar ist, in der die Rückenlehne nicht verdreht ist und sich im Wesentlichen entlang einer zu der Lehnenlängsachse parallelen Lehnenebene erstreckt. Derart kann die durch einen Sitzbenutzer gegebenenfalls während des Anschnallens in sich verdrehte Rückenlehne durch die Antriebseinrichtung wieder in die Normallage zurückgeführt werden, in der die Rückenlehne wieder durch die Verriegelungsvorrichtung verriegelt werden kann und eine auch im Crash-Fall sichere Abstützung des Rückens eines Sitzbenutzers gewährleistet ist. Über die vorzugsweise an einem Lehnenrahmen der Rückenlehne angeordnete Antriebseinrichtung kann somit auf Benutzerwunsch und/oder unabhängig von einem Sitzbenutzer die Rückenlehne wieder in eine für den Crash-Fall angepasste Normallage und Sitzposition überführt werden, wenn sich der Sitzbenutzer angeschnallt hat.

In einer Weiterbildung ist eine Steuerelektronik vorgesehen, mittels der ein Überführen der verdrehten Rückenlehne in die Normallage und/oder eine Verriegelung durch eine Verriegelungsvorrichtung des Fahrzeugsitzes gesteuert, insbesondere jeweils ausgelöst werden kann. Über die Steuerelektronik kann hierbei ein motorischer Antrieb der Antriebseinrichtung angesteuert werden, um einen verlagerten Abschnitt der Rückenlehne wieder in die Normallage zu schwenken.

Die Steuerelektronik kann dazu ausgebildet und vorgesehen sein, ein Überführen der verdrehten Rückenlehne in die Normallage und/oder die Verriegelung über eine Verriegelungsvorrichtung auszulösen, wenn ein Auslösesignal von der Bordelektronik des Fahrzeugs erzeugt wird. Beispielsweise kann ein Überführen der verdrehten Rückenlehne in die Normallage und eine Verriegelung ausgelöst werden, indem ein Fahrzeugschlüssel in das Fahrzeugzündschloss eingesteckt und/oder der Motor des Fahrzeugs gestartet wird. Derart wird sichergestellt, dass die Rückenlehne spätestens zu Fahrtbeginn in ihrer Normallage vorliegt und nicht (mehr) bezüglich ihrer Lehnenlängsachse verdreht oder verwunden werden kann. Die Rückenlehne liegt somit (wieder) in einer Gebrauchsposition vor, in der ein Sitzbenutzer an seinem Rücken durch die verriegelte und gegebenenfalls an dem Sitzuntergestell arretierte Rückenlehne auch im Crash-Fall ausreichend abgestützt ist.

In einer Ausführungsvariante erfolgt ein Überführen einer in sich verdrehten Rückenlehne in eine Normallage, wenn ein Auslösesignal von einem Precrash-Sensor des Fahrzeugs erzeugt wird. Demgemäß kann die Steuerelektronik dazu ausgebildet und vorgesehen sein, ein Überführen der verdrehten Rückenlehne in die Normallage auszulösen, wenn ein Auslösesignal von einem Precrash-Sensor des Fahrzeugs erzeugt wird. Derart kann bei Detektion einer Crash-Gefahr oder einer zu erwartenden Vollbremsung die Rückenlehne in eine nicht verdrehte und aufrechte Normallage überführt werden.

In einer Weiterbildung ist dabei vorgesehen, dass mittels der Antriebseinheit die Rückenlehne mit einer Verstellgeschwindigkeit in die Normallage überführbar ist, die zu einer Verstellgeschwindigkeit verschieden ist, mit der die Rückenlehne mittels der Antriebseinheit in Reaktion auf ein von einem Benutzer ausgelöstes Bedienereignis verdreht wird. So kann folglich in einer Precrash-Situation das Überführen in die Normallage mit einer höheren Verstellgeschwindigkeit erfolgen als bei einem Verdrehen der Rückenlehne zu Komfortzwecken.

Eine Rückführung der Rückenlehne in eine Normallage kann durch Zurückschwenken einer Lehnenlängsseite erreicht werden, bis diese wieder parallel zu der gegenüberliegenden Lehnenlängsseite verläuft. Um in einer Precrash-Situation das Überführen in die Normallage zu beschleunigen, kann die Steuerelektronik dazu ausgebildet und vorgesehen sein, eine Lehnenlängsseite in eine Schwenkrichtung um die Schwenkachse der Rückenlehne zu verschwenken und die andere Lehnenlängsseite um dieselbe Schwenkachse in eine entgegengesetzte Schwenkrichtung zu verschwenken. Durch zueinander gegenläufige Schwenkbewegungen der beiden Lehnenlängsseiten kann ein schnelleres Überführen der bezüglich ihrer Lehnenlängsachse verdrehten Rückenlehne in eine unverdrehte Normallage erfolgen, als dies bei einem Verschwenken lediglich einer Lehnenlängsseite der Fall wäre. Eine exakt in Fahrtrichtung des Fahrzeugs ausgerichtete, unverdrehte Normallage wird hier somit durch eine tunnel- und türseitig gegenläufige Verstellbewegung der Lehnenlängsseiten der Rückenlehne erheblich beschleunigt.

In einer Ausführungsvariante ist zusätzlich eine Verriegelungsvorrichtung vorgesehen, die
- in einem unverriegelten Zustand eine Verdrehung der in der Gebrauchsposition befindlichen Rückenlehne bezüglich ihrer Lehnenlängsachse mittels der Antriebseinrichtung gestattet und
- in einem verriegelten Zustand die in der Gebrauchsposition befindliche Rückenlehne gegen eine Verdrehung bezüglich ihrer Lehnenlängsachse sperrt.

Eine derartige Verriegelungsvorrichtung kann somit in einer Antriebseinrichtung integriert sein oder zusätzlich zu der Antriebseinrichtung vorgesehen sein, gegebenenfalls auch zusätzlich zu einer selbsthemmenden Antriebseinrichtung, um insbesondere in einem Crash-Fall eine zusätzliche Arretierung der um ihre Lehnenlängsachse verdrehbaren Rücklehne sicherzustellen.

Mittels der Steuerelektronik kann weiterhin eine Verriegelungsvorrichtung des Fahrzeugsitzes so angesteuert sein, dass die Verriegelungsvorrichtung die Rückenlehne gegen eine Verdrehung um ihre Lehnenlängsachse nur sperrt, wenn der Motor des Fahrzeugs läuft. Nach Abschalten des Motors oder eines definierten Zeitraums danach wird mithilfe der Steuerelektronik die Verriegelung über die Verriegelungsvorrichtung gelöst, sodass die Rückenlehne in ihrer Gebrauchsposition eine maximale Bewegungsfreiheit ermöglicht.

Die Steuerelektronik kann weiterhin mit einer Sensoreinrichtung gekoppelt sein, um zu detektieren, ob durch einen Sitzbenutzer (weiterhin) eine Kraft auf einen im unverriegelten Zustand der Verriegelungsvorrichtung verlagerbaren Abschnitt der Rückenlehne ausgeübt wird. Wird über die Sensoreinrichtung beispielsweise über einen definierten Erfassungszeitraum detektiert, dass eine Kraft auf den jeweiligen Abschnitt unter einem Grenzwert liegt, wird die in sich verdrehte Rückenlehne automatisch wieder in ihre Normallage überführt. Auf diese Weise wird sichergestellt, dass die Rückenlehne stets in ihre Normallage zurückkehrt, wenn ein Sitzbenutzer nicht mehr auf den jeweiligen verlagerbaren Abschnitt einwirkt und beispielsweise der Anschnallvorgang abgeschlossen ist.

Die Sensoreinrichtung kann drucksensitiv arbeiten und somit anhand einer Druckkraft, die im Bereich des verlagerbaren Abschnitts wirkt, feststellen, ob ein Überführen der Rückenlehne in ihre Normallage mithilfe der Antriebseinrichtung erfolgen kann. Es wird also über die Sensoreinrichtung sensorisch detektiert, ob eine Entlastung des jeweiligen Abschnitts stattgefunden hat und damit die Rückenlehne wieder in ihre nichtverdrehte Normallage zurücküberführt werden kann.

Ein Auslösesignal zum Überführen der verdrehten Rückenlehne in ihre Normallage und/oder zur Verriegelung über die Verriegelungsvorrichtung kann beispielsweise auch durch ein Gurtschloss des Sicherheitssystems erzeugt sein, wenn detektiert wird, dass der Sicherheitsgurt geschlossen und eine Gurtlasche des Sicherheitsgurtes in das Gurtschloss bestimmungsgemäß eingesteckt wurde.

Weitere Vorteile und Merkmale der vorliegenden Erfindung werden bei der nachfolgenden Beschreibung von Ausführungsbeispielen anhand der Figuren deutlich werden.

Hierbei zeigen:
- Figuren 1A-1D: in Vorderansicht jeweils unterschiedliche Varianten eines erfindungsgemäßen Fahrzeugsitzes mit einer schaltbaren Getriebeeinheit in unterschiedlichen Positionen;
- Figuren 2A-2D: in verschiedenen Ansichten ein erfindungsgemäßer Fahrzeugsitz jeweils in der Gebrauchsposition und in Normallage sowie in einseitig verwundenen Zustand;
- Figuren 3A-3B: der Fahrzeugsitz der Figuren 2A-2D mit einem hierauf sitzenden Sitzbenutzer in der Normallage und in einem einseitig verwundenen Zustand, in dem für den Sitzbenutzer ein Ergreifen eines Sicherheitsgurtes erleichtert ist.

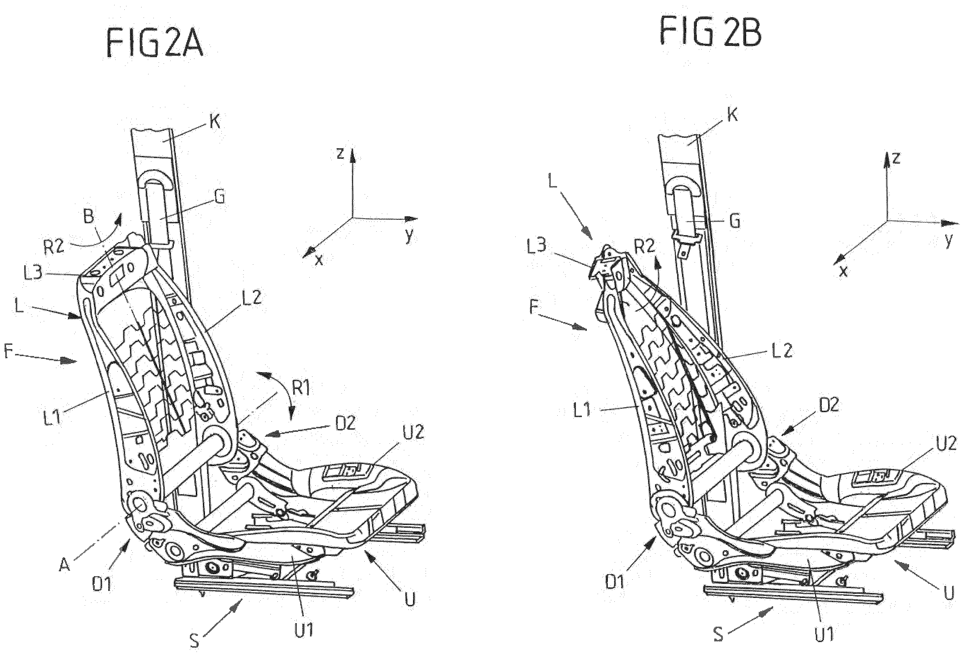

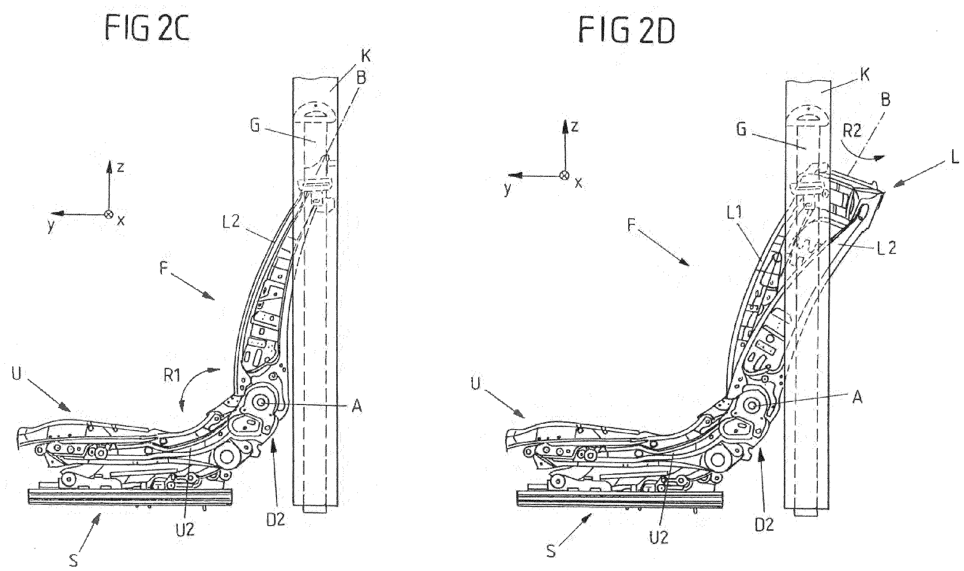

Die Figuren 2A-2B und 2C-2D zeigen einerseits in perspektivischer Ansicht und andererseits in Seitenansicht einen Fahrzeugsitz F mit einem Sitzuntergestell U und einer hieran um eine Lehnenschwenkachse A verschwenkbar gelagerten Rückenlehne L, jedoch ohne hieran vorzusehende Sitz- und Rückenpolster. Der gesamte Fahrzeugsitz F ist an dem Sitzuntergestell U über eine Schienenanordnung S längsverschieblich gelagert.

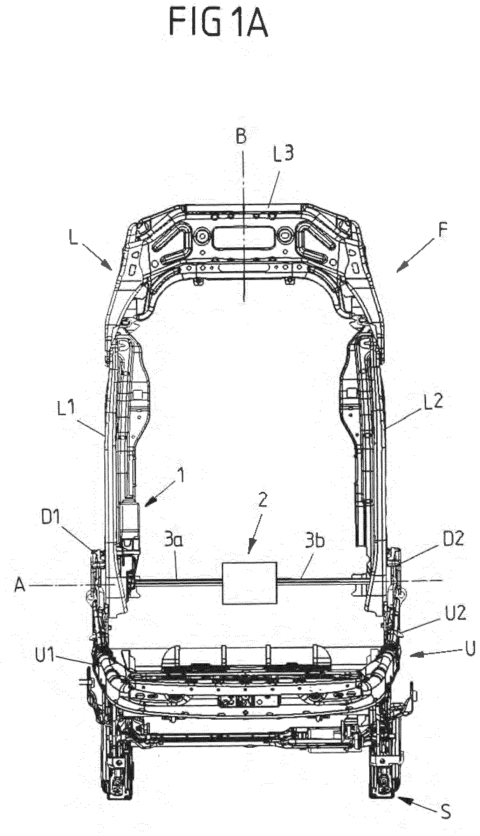

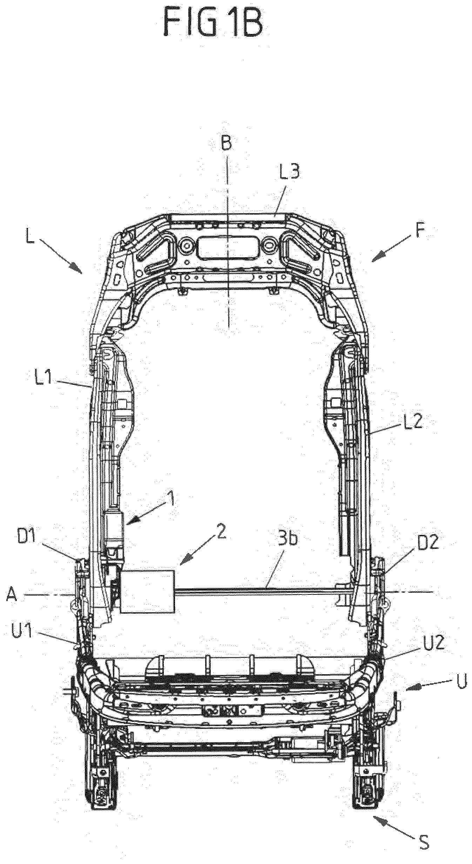

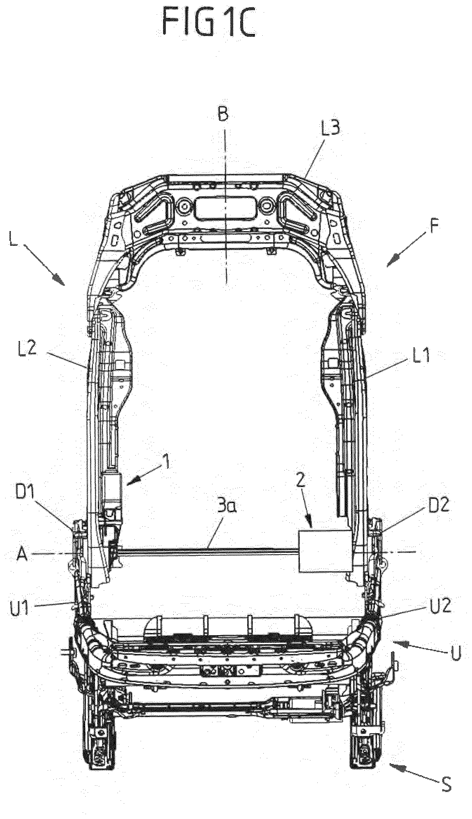

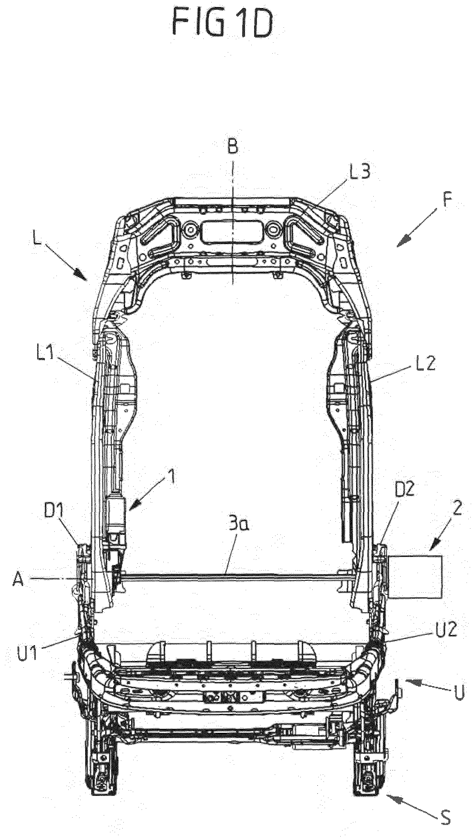

Die Figuren 2A bis 2D zeigen den Fahrzeugsitz F jeweils mit seiner Rückenlehne L in einer Gebrauchsposition. In der dargestellten Gebrauchsposition der Rückenlehne L, in der eine Person bestimmungsgemäß auf dem Fahrzeugsitz F Platz nehmen könnte, verläuft eine Lehnenlängsachse B der Rückenlehne L in einem Lehnenwinkel zu der von dem Sitzuntergestell U definierten Sitzfläche. In den Figuren 2A und 2C befindet sich die Rückenlehne L somit exemplarisch in einer aufrechten Position und die Lehnenlängsachse B verläuft in einem Winkel von nahezu 90 ° zu der Sitzfläche. Die Lehnenlängsachse B ist vorliegend in etwa mittig an der Rückenlehne L eingezeichnet, so dass die Lehnenlängsachse B eine Mittelachse für die Rückenlehne L definiert, die die Rückenlehne L in zwei (rechte und linke) Lehnenlängsseiten bzw. Lehnenhälften unterteilt. Beiderseits der Lehnenlängsachse B ist die Rückenlehne L über jeweils einen (Dreh-) Beschlag D1 oder D2 an dem Sitzuntergestell U verschwenkbar gelagert. Über die zwei Drehbeschläge D1 und D2 ist dabei ein Lehnenseitenteil L1, L2 eines Lehnenrahmens der Rückenlehne L jeweils an einem Seitenteil U1 und U2 des Sitzuntergestells U verschwenkbar gelagert. Die Lehnenseitenteile L1 und L2, beispielsweise jeweils in Form eines seitlichen Lehnenholms, liegen sich entlang der Lehnenlängsachse B gegenüber und sind in der Gebrauchsposition und der in der Figur 1 gezeigten Normallage zueinander parallel.

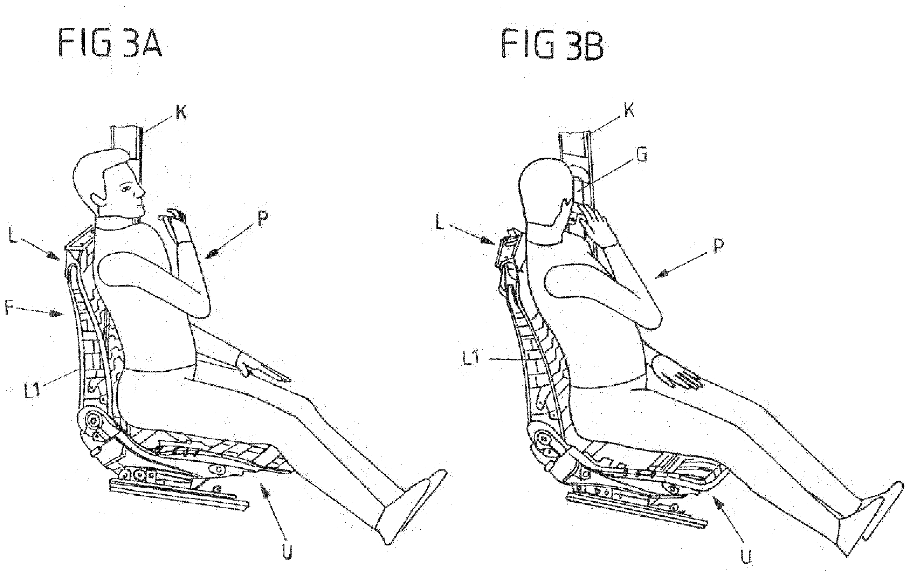

Zum Anschnallen eines Fahrzeuginsassen oder Sitzbenutzers P (vergleiche insbesondere die Figuren 3A und 3B) ist ein Sicherheitsgurt G vorgesehen. Dieser Sicherheitsgurt G ist an einem Karosserieteil K festgelegt, z. B. bei einem Fahrzeugsitz F für einen Fahrer des Fahrzeugs im Bereich der B-Säule. Der Sicherheitsgurt G und insbesondere die von dem Sitzbenutzer P für das Anschnallen zu ergreifende Gurtlasche des Sicherheitsgurtes G befindet sich in der gezeigten Gebrauchsposition der Rückenlehne L bezogen auf eine Fahrtrichtung des Fahrzeugs hinter dem Sitzbenutzer P und hinter der Rückenlehne L neben dem Fahrzeugsitz F. Hierdurch kann der Sitzbenutzer P den Sicherheitsgurt G nur schwer erreichen und muss sich sehr weit drehen, um an der Rückenlehne L seitlich vorbei den Sicherheitsgurt G zu ergreifen und sich anschnallen zu können.

Bei dem erfindungsgemäßen Fahrzeugsitz F ist insbesondere die Zugänglichkeit des Sicherheitsgurtes G durch einen auf dem Fahrzeugsitz F sitzenden Sitzbenutzer P nun dadurch erleichtert, dass die Rückenlehne L in sich bezüglich der Lehnenlängsachse B verdreht werden kann, wie dies in den Figuren 2B und 2D dargestellt ist. Hierbei werden verstellbar und gegebenenfalls zusätzlich flexibel ausgestaltete Abschnitte der Rückenlehne L in eine Verdrehrichtung R2 bezüglich der Lehnenlängsachse B verlagert, so dass sich eine Verdrehung oder Verwindung der Rückenlehne L ergibt.

Durch die Verdrehung oder Verwindung der Rückenlehne L bezüglich der Lehnenlängsachse B wird aber nicht nur die Zugänglichkeit des Sicherheitsgurts G verbessert. Vielmehr kann auch die Ausführung eines Schulterblicks sowie der Ein- und Ausstieg aus einem Fahrzeug vereinfacht werden. Weiterhin ist hierüber eine zusätzliche Verstellebene eingeführt, so dass eine verbesserte Einstellung der Lehnenlage und feinere Anpassung an den Körper des Sitzbenutzers möglich ist. Auch kann über die zugelassene Verdrehung oder Verwindung der Rückenlehne L eine verbesserte fahrdynamische Abstützung des Rückens eines Sitzbenutzers erfolgen.

Diese Verdrehung oder Verwindung der Rückenlehne L bezüglich ihrer Lehnenlängsachse B kann dabei automatisch erfolgen und/oder durch den Sitzbenutzer P gesteuert werden, indem der Sitzbenutzer P z.B. beim Drehen seines Oberkörpers mit einer größeren Kraft auf die entsprechenden Abschnitte der Rückenlehne L einwirkt. Dies kann sensorisch erfasst werden, um eine Verdrehung mittels einer Antriebseinrichtung des Fahrzeugsitzes F auszulösen. Die durch den Sitzbenutzer P verlagerbaren Abschnitte der Rückenlehne L werden dabei hinten verstellt, so dass der Sitzbenutzer P nicht um die Rückenlehne L herumgreifen muss, um den Sicherheitsgurt G zu erreichen.

Die Verlagerbarkeit des jeweiligen seitlichen Rückenlehnenabschnitts, der dem Karosserieteil K mit dem Sicherheitsgurt G gegenüberliegt, ist vorliegend dadurch erreicht, dass das türseitige Lehnenseitenteil L2 der Rückenlehne L verstellbar ausgestaltet ist und zwar derart, dass es stärker nach hinten geneigt werden kann, als das gegenüberliegende tunnelseitige Lehnenseitenteil L1. In der dargestellten Ausführungsvariante der Figuren 2A-2D und 3A-3B ist somit wenigstens eines der Lehnenseitenteile L1, L2 der Rückenlehne L unabhängig von dem anderen Lehnenseitenteil L1 verlagerbar ausgestaltet. Derart kann ein Sitzbenutzer P das eine Lehnenseitenteil L2 um die Lehnenschwenkachse A nach hinten verschwenken, ohne dabei auch das andere Lehnenseitenteil L1 mit zu verschwenken, so dass die Rückenlehne L in sich bezüglich der Lehnenlängsachse B verdreht und der Sicherheitsgurt G besser erreichbar wird. Hier wird folglich eine Verdrehung der in ihrer Gebrauchsposition befindlichen Rückenlehne L bezüglich ihrer Lehnenlängsachse B dadurch erreicht, dass nur eines der Lehnenseitenteile L1, L2 um die Lehnenschwenkachse A in eine Schwenkrichtung R1 durch den Sitzbenutzer P verlagerbar ist, während das gegenüberliegende Lehnenseitenteil L1 der Rückenlehne L bezüglich des Sitzuntergestells U arretiert bleibt. Um hierbei eine Verdrehung oder Verwindung der Rückenlehne L zu gestatten, sind die beiden Lehnenseitenteile L1 und L2 an einem oberen, von dem Sitzuntergestell U entfernten Ende (im Bereich einer hier nicht dargestellten Kopfstütze) mit einem Lehnenkopf L3 verbunden, der der Rückenlehne L infolge seiner Steifigkeit, infolge seiner Anbindung an die Lehnenseitenteile L1 und L2 und/oder der Einbringung einer oder mehrerer Gelenke an den Lehnenseitenteilen L1 und L2 in dem oberen Bereich eine gewisse Flexibilität verleiht.

Eine Verdrehung oder Verwindung der Rückenlehne L bezüglich der Lehnenlängsachse B wird erfindungsgemäß über eine einzelne Antriebseinheit 1 der Antriebseinrichtung in Kombination mit einer schaltbaren Getriebeeinheit 2 der Antriebseinrichtung ermöglicht.

Über die schaltbare Getriebeeinheit 2 ist hierbei ein von der Antriebseinheit 1 erzeugtes Antriebsmoment zwischen den einzelnen Lehnenlängsseiten aufteilbar und beispielsweise eine Verstellkraft bei Bedarf nur an eines der beiden Lehnenseitenteile L1 oder L2 sowie den zugeordneten Drehbeschlag D1 oder D2 übertragbar. Mögliche Ausführungsvarianten sind hierbei exemplarisch in den nachfolgend noch näher erläuterten Figuren 1A bis 1D gezeigt.

Die Figuren 1A bis 1D zeigen jeweils in Vorderansicht den Fahrzeugsitz F mit einer elektromotorischen Antriebseinheit 1, die an einem - hier tunnelseitigen - Lehnenseitenteil L1 an dessen Innenseite angeordnet ist. Über eine schaltbare Getriebeeinheit 2, die beispielsweise eine schaltbare Reibkupplung umfasst, kann ein von der Antriebseinheit 1 erzeugtes Antriebsmoment gezielt aufgeteilt werden, so dass wahlweise beide Lehnenseitenteile L1 und L2 synchron, nur eines der beiden Lehnenseitenteile L1, L2 alleine oder beide Lehnenseitenteile L1, L2 mit unterschiedlichen Drehzahlen und/oder in unterschiedlichen Drehrichtungen um die Schwenkachse A nur von der einzelnen Antriebseinheit 1 angetrieben verschwenkt werden.

In dem Ausführungsbeispiel der Figur 1A ist die schaltbare Getriebeeinheit 2 in etwa mittig zwischen den beiden Lehnenseitenteilen L1 und L2 innerhalb des Lehnenrahmens der Rückenlehne L in einem unteren Bereich (in etwa auf Höhe der und zwischen den beiden Drehbeschlägen D1 und D2) angeordnet. Die Getriebeeinheit 2 ist über zwei Querwellen 3a und 3b als Übertragungsgliedern mit beiden Drehbeschlägen D1 und D2 verbunden. Die eine Querwelle 3a wird von der Antriebseinheit 1 stets bei Betätigung der Antriebseinheit 1 in Drehbewegung um die Schwenkachse A oder eine hierzu parallele Drehachse angetrieben. Über die Getriebeeinheit 2 wird diese Drehbewegung an die andere Querwelle 3b übertragen, um das zugeordnete Lehnenseitenteil L2 um die Schwenkachse A zu verschwenken. Je nach Ausführungsvariante, ist die Getriebeeinheit 2 nun schaltbar, um die beiden Querwellen 3a und 3b und damit die beiden Lehnenseitenteile L1 und L2
- voneinander zu entkoppeln, so dass bei einer Betätigung der Antriebseinheit 1 nur das eine Lehnenseitenteil L1 verschwenkt wird, oder
- miteinander zu koppeln, so dass bei einer Betätigung der Antriebseinheit 1 beide Lehnenseitenteile L1 und L2 verschwenkt werden.

In einer möglichen Grundstellung der Getriebeeinheit sind die beiden Querwellen 3a und 3b entweder miteinander gekoppelt oder voneinander entkoppelt.

In einer weiteren Ausführungsvariante kann die Getriebeeinheit 2 eine weitere Schaltstellung einnehmen, in der über die Getriebeeinheit 2 ein Drehmoment der Querwelle 3a in ein gleichgerichtetes Drehmoment der Querwelle 3b derart übersetzt ist, dass die Querwelle 3b mit einer geringeren Drehgeschwindigkeit gedreht wird als die mit der Antriebseinheit 1 unmittelbar gekoppelte Querwelle 3a, um eine Verdrehung der Rückenlehne L um ihre Lehnenlängsachse B herbeizuführen. In einer alternativ oder ergänzend vorgesehenen Schaltstellung kann über die Getriebeeinheit 2 eine Drehbewegung des mit der Antriebseinheit 1 gekoppelten Querwelle 3a in eine Drehbewegung der Querwelle 3b in eine entgegengesetzte Drehrichtung umsetzbar sei.

Bei der Ausführungsvariante der Figur 1B ist die Getriebeeinheit 2 dem Lehnenseitenteil L1 zugeordnet und an dessen Innenseite angeordnet. Die Querwelle 3a der Figur 1A entfällt hier somit. Über die Getriebeeinheit 2 ist hierbei gezielt schaltbar, welches der Lehnenseitenteile L1 oder L2 um die Schwenkachse A durch ein von der Antriebseinheit 1 erzeugtes Antriebsmoment geschwenkt wird. Für die Übertragung einer Verstellkraft an das zu der Getriebeeinheit 2 beabstandete (türseitige) Lehnenseitenteil und den zugehörigen Drehbeschlag D2 ist eine Querwelle 3b vorgesehen, die über nahezu die gesamte Breit des Lehnenrahmens der Rückenlehne L erstreckt.

In der Ausführungsvariante der Figur 1C ist die Antriebseinheit 1 erneut an dem einen (tunnelseitigen) Lehnenseitenteil an dessen Innenseite angeordnet. Die Getriebeeinheit 2 ist demgegenüber an dem anderen (türseitigen) Lehnenseitenteil L1 an dessen Innenseite angeordnet. Die Übertragung einer Verstellkraft für die bedarfsweise Verstellung des Lehnenseitenteils L1 erfolgt hier über eine - gegenüber dem Ausführungsbeispiel der Figur 1A länger ausgebildeten - Querwelle 3a. Diese Querwelle 3a verbindet den tunnelseitigen Drehbeschlag D1 mit der Getriebeeinheit 2, die somit bei Bedarf den türseitigen Drehbeschlag D2 hiermit koppeln oder hiervon entkoppeln kann, so dass voneinander unabhängige Verstellungen der Lehnenseitenteile L1 und L2 relativ zueinander ermöglicht sind. Selbstverständlich kann über die Getriebeeinheit 2 der Figur 1C auch eine Verstellung der Lehnenseitenteile L1 und L2 in unterschiedliche Drehrichtungen und/oder mit unterschiedlichen Drehgeschwindigkeiten in dieselbe Drehrichtung möglich sein.

Bei der Ausführungsvariante der Figur 1D sind die beiden Drehbeschläge D1 und D2 und somit die beiden Lehnenseitenteile L1 und L2 über eine einzelne Querwelle 3a miteinander verbunden. Diese Querwelle 3a wird von der Antriebseinheit 1 angetrieben, die auch hier an dem einen Lehnenseitenteil L1 an dessen Innenseite angeordnet ist. Für die Verdrehung der Rückenlehne L um ihre Lehnenlängsachse B ist auch hier eine schaltbare Getriebeeinheit 2 vorgesehen, die mit der Querwelle 3a verbunden ist. Die Getriebeeinheit 2 ist hier jedoch an einer Außenseite des Drehbeschlags D2 vorgesehen. Hierfür kann die Getriebeeinheit 2 beispielsweise teilweise oder vollständig an einer Außenseite des Seitenteils U2 montiert sein. Die außenliegende schaltbare Getriebeeinheit 2 des Ausführungsbeispiels der Figur 1D ist beispielsweise für Wartungs- und Reparaturzwecke leichter zugänglich. Demgegenüber ist eine innenliegende Getriebeeinheit 2 gemäß den Figuren 1A, 1B und 1C platzsparender innerhalb der Rückenlehne L untergebracht.

### Bezugszeichenliste

- 1: Antriebseinheit
- 2: Schaltbare Getriebeeinheit
- 3a, 3b: Querwelle (Übertragungsglied)
- A: Schwenkachse
- B: Lehnenlängsachse / Mittelachse
- D1,D2: Drehbeschlag
- F: Fahrzeugsitz
- G: Sicherheitsgurt
- K: Karosserieteil
- L: Rückenlehne
- L1, L2: Lehnenseitenteil
- P: Fahrzeuginsasse
- R1: Schwenkrichtung
- R2: Verdrehrichtung
- S: Schienenanordnung
- U: Sitzuntergestell
- U1, U2: Seitenteil

## Patentansprüche

1. Fahrzeugsitz, mit
- einem eine Sitzfläche definierenden Sitzuntergestell (U) und einer Rückenlehne (L), wobei sich die Rückenlehne (L) entlang einer Lehnenlängsachse (B) erstreckt und die Lehnenlängsachse (B) in einer Gebrauchsposition der Rückenlehne (L), in der eine Person (P) bestimmungsgemäß auf dem Fahrzeugsitz (F) Platz nehmen kann, unter einem Lehnenwinkel zu der Sitzfläche verläuft, und
- einer Antriebseinrichtung mit einer Antriebseinheit (1), die eine fremdkraftbetätigte Verdrehung der in der Gebrauchsposition befindlichen Rückenlehne (L) bezüglich ihrer Lehnenlängsachse (B) gestattet, bei der eine Lehnenlängsseite der Rückenlehne (L) bezüglich einer Schwenkachse (A) stärker nach hinten geneigt ist als die andere Lehnenlängsseite,
**gekennzeichnet durch**
wenigstens eine schaltbare Getriebeeinheit (2) der Antriebseinrichtung, mittels der ein von der Antriebseinheit (1) erzeugtes Antriebsmoment zwischen den Lehnenlängsseiten aufteilbar ist, um die Rückenlehne (L) bezüglich ihrer Lehnenlängsachse (B) zu verdrehen.

2. Fahrzeugsitz nach Anspruch 1, **dadurch gekennzeichnet, dass** die Rückenlehne (L) an dem Sitzuntergestell (U) um die Schwenkachse (A) relativ zu der Sitzfläche verschwenkbar ist und die Rückenlehne (L) hierfür beiderseits einer zu der Lehnenlängsachse parallelen Mittelachse (B) der Rückenlehne (L) an dem Sitzuntergestell (U) über zwei Lehnenbeschläge (D1, D2) verschwenkbar gelagert ist, wobei die Rückenlehne (L) durch die Mittelachse (B) in zwei Lehnenlängsseiten geteilt ist und über die Antriebseinrichtung eine Lehnenlängsseite der Rückenlehne (L) unabhängig von der anderen Lehnenlängsseite um die Schwenkachse (A) verschwenkbar ist.

3. Fahrzeugsitz nach Anspruch 2, **dadurch gekennzeichnet, dass** die Antriebseinrichtung über wenigstens zwei Übertragungsglieder (3a, 3b), die jeweils mit der Getriebeeinheit (2) verbunden sind, mit den zwei Lehnenbeschlägen zusammenwirkt, um über die Übertragungsglieder (3a, 3b) eine Verstellkraft an die Lehnenbeschläge (D1, D2) zu übertragen und bei Bedarf voneinander unabhängige, fremdkraftbetätigte Verstellungen der Lehnenlängsseiten um die Schwenkachse (A) zu gestatten.

4. Fahrzeugsitz nach Anspruch 3, **dadurch gekennzeichnet, dass** wenigstens ein Übertragungsglied eine Querwelle (3a, 3b) umfasst, die sich von der Getriebeeinheit (2) zu einem Lehnenbeschlag (D1, D2) erstreckt.

5. Fahrzeugsitz nach einem der vorhergehenden Ansprüche, **dadurch gekennzeichnet, dass** über die schaltbare Getriebeeinheit (2) wahlweise
- beide Lehnenlängsseiten synchron oder nur eine Lehnenlängsseite alleine verstellbar sind oder
- beide Lehnenlängsseiten synchron oder beide Lehnenlängsseiten mit unterschiedlichen Drehzahlen und/oder in unterschiedliche Drehrichtungen verstellbar sind oder
- beide Lehnenlängsseiten synchron, nur eine Lehnenlängsseite alleine oder beide Lehnenlängsseiten mit unterschiedlichen Drehzahlen und/oder in unterschiedliche Drehrichtungen verstellbar sind.

6. Fahrzeugsitz nach einem der vorhergehenden Ansprüche, **dadurch gekennzeichnet, dass** die Antriebseinheit (1) eingerichtet ist, stets an eine der beiden Lehnenlängsseiten eine Verstellkraft zu übertragen, und über die Getriebeeinheit (2) bei Bedarf eine Kopplung mit der anderen Lehnenlängsseite erfolgt, so dass beide Lehnenlängsseiten gemeinsam verstellbar sind.

7. Fahrzeugsitz nach einem der Ansprüche 1 bis 5, **dadurch gekennzeichnet, dass** die Antriebseinheit (1) eingerichtet ist, an beide Lehnenlängsseiten eine Verstellkraft zu übertragen, und über die Getriebeeinheit (2) bei Bedarf wenigstens eine der beiden Lehnenlängsseiten von der Antriebseinheit (1) entkoppelbar ist, so dass ein Antriebsmoment der Antriebseinheit (1) nicht zu einer Verstellung dieser Lehnenlängsseite führt.

8. Fahrzeugsitz nach Anspruch 7, **dadurch gekennzeichnet, dass** die Getriebeeinheit (2) an einer Lehnenlängsseite angeordnet ist und zwischen einer Übertragungsstellung und einer Leerlaufstellung schaltbar ist, so dass in der Übertragungsstellung eine Verstellkraft, die von der Antriebseinheit (1) an die die Getriebeeinheit (2) aufweisende Lehnenlängsseite mittels eines Übertragungsgliedes (3a, 3b) der Antriebseinrichtung übertragen wird, zu einem Verschwenken eines diese Lehnenlängsseite definierenden Lehnenseitenteils (L1, L2) der Rückenlehne (L) führt und in einer Leerlaufstellung ein Antriebsmoment der Antriebseinheit (1) lediglich zu einer Verstellung des Übertragungsglieds (3a, 3b) führt, ohne das Lehnenseitenteil (L1, L2) zu verstellen.

9. Fahrzeugsitz nach Anspruch 7 oder 8, **dadurch gekennzeichnet, dass** wenigstens zwei Getriebeeinheiten (2) vorgesehen sind, die unterschiedlichen Lehnenlängsseiten zugeordnet und jeweils eingerichtet sind, bei Bedarf die jeweilige Lehnenlängsseite von der Antriebseinheit (1) zu entkoppeln.

10. Fahrzeugsitz nach einem der vorhergehenden Ansprüche, **dadurch gekennzeichnet, dass** die Getriebeeinheit (2) von der Antriebseinheit (1) räumlich getrennt an dem Fahrzeugsitz (F) angeordnet ist.

11. Fahrzeugsitz nach Anspruch 10, **dadurch gekennzeichnet, dass** die Antriebseinheit (1) an einer Lehnenlängsseite angeordnet ist und die Übertragung des Antriebsmoments oder eines Teiles hiervon an die andere Lehnenlängsseite nur über die Getriebeeinheit (2) hinweg möglich ist.

12. Fahrzeugsitz nach einem der vorhergehenden Ansprüche, **dadurch gekennzeichnet, dass** die Getriebeeinheit (2) zwischen zwei Lehnenseitenteilen (L1, L2) der Rückenlehne (L) angeordnet ist.

13. Fahrzeugsitz nach einem der vorhergehenden Ansprüche, **dadurch gekennzeichnet, dass** die Getriebeeinheit (2) an einer Außenseite eines Lehnenseitenteils (L1, L2) der Rückenlehne (L) angeordnet ist.

14. Fahrzeugsitz nach einem der vorhergehenden Ansprüche, **dadurch gekennzeichnet, dass** die Getriebeeinheit (2) eine schaltbare Reibkupplung umfasst.

## Claims

1. A vehicle seat, comprising
- a seat base (U) defining a seating surface and a backrest (L), wherein the backrest (L) extends along a longitudinal backrest axis (B) and in a position of use of the backrest (L), in which a person (P) can properly take a seat on the vehicle seat (F), the longitudinal backrest axis (B) extends at a backrest angle to the seating surface, and
- a driving device with a drive unit (1), which permits a power-operated twisting of the backrest (L) disposed in a position of use with respect to its longitudinal backrest axis (B), in which a backrest long side of the backrest (L) is inclined to the rear more strongly than the other backrest long side with respect to a pivot axis (A),
**characterized by**
at least one switchable gear unit (2) of the driving device, by means of which a driving torque generated by the drive unit (1) can be split between the backrest long sides in order to twist the backrest (L) with respect to its longitudinal backrest axis (B).

2. The vehicle seat according to claim 1, **characterized in that** on the seat base (U) the backrest (L) is pivotable about the pivot axis (A) relative to the seating surface and the backrest (L) therefor is pivotally mounted on the seat base (U) via two backrest fittings (D1, D2) on both sides of a middle axis (B) of the backrest (L) parallel to the longitudinal backrest axis, wherein the backrest (L) is split into two backrest long sides by the middle axis (B) and via the driving device a backrest long side of the backrest (L) is pivotable about the pivot axis (A) independent of the other backrest long side.

3. The vehicle seat according to claim 2, **characterized in that** the driving device cooperates with the two backrest fittings via at least two transmission members (3a, 3b) which each are connected to the gear unit (2), in order to transmit an adjusting force to the backrest fittings (D1, D2) via the transmission members (3a, 3b) and, when necessary, permit mutually independent, power-operated adjustments of the backrest long sides about the pivot axis (A).

4. The vehicle seat according to claim 3, **characterized in that** at least one transmission member comprises a transverse shaft (3a, 3b) that extends from the gear unit (2) to a backrest fitting (D1, D2).

5. The vehicle seat according to any of the preceding claims, **characterized in that** selectively via the switchable gear unit (2)
- both backrest long sides are synchronously adjustable or only one backrest long side is adjustable alone, or
- both backrest long sides are synchronously adjustable or both backrest long sides are adjustable with different rotational speeds and/or in different directions of rotation, or
- both backrest long sides are synchronously adjustable, only one backrest long side is adjustable alone or both backrest long sides are adjustable with different rotational speeds and/or in different directions of rotation.

6. The vehicle seat according to any of the preceding claims, **characterized in that** the drive unit (1) is equipped to always transmit an adjusting force to one of the two backrest long sides, and coupling with the other backrest long side is effected via the gear unit (2) when necessary, so that both backrest long sides are jointly adjustable.

7. The vehicle seat according to any of claims 1 to 5, **characterized in that** the drive unit (1) is equipped to transmit an adjusting force to both backrest long sides, and via the gear unit (2) at least one of the two backrest long sides can be decoupled from the drive unit (1) when necessary, so that a driving torque of the drive unit (1) does not lead to an adjustment of this backrest long side.

8. The vehicle seat according to claim 7, **characterized in that** the gear unit (2) is arranged on a backrest long side and is switchable between a transmission position and an idling position so that in the transmission position an adjusting force, which is transmitted from the drive unit (1) to the backrest long side including the gear unit (2) by means of a transmission member (3a, 3b) of the driving device, leads to pivoting of a backrest side part (L1, L2) of the backrest (L) defining this backrest long side, and in an idling position a driving torque of the drive unit (1) merely leads to an adjustment of the transmission member (3a, 3b) without adjusting the backrest side part (L1, L2).

9. The vehicle seat according to claim 7 or 8, **characterized in that** at least two gear units (2) are provided, which are assigned to different backrest long sides and each are equipped to decouple the respective backrest long side from the drive unit (1) when necessary.

10. The vehicle seat according to any of the preceding claims, **characterized in that** the gear unit (2) is arranged on the vehicle seat (F) spatially separate from the drive unit (1).

11. The vehicle seat according to claim 10, **characterized in that** the drive unit (1) is arranged on a backrest long side and the transmission of the driving torque or a part thereof to the other backrest long side only is possible across the gear unit (2).

12. The vehicle seat according to any of the preceding claims, **characterized in that** the gear unit (2) is arranged between two backrest side parts (L1, L2) of the backrest (L).

13. The vehicle seat according to any of the preceding claims, **characterized in that** the gear unit (2) is arranged on an outside of a backrest side part (L1, L2) of the backrest (L).

14. The vehicle seat according to any of the preceding claims, **characterized in that** the gear unit (2) comprises a switchable friction clutch.

## Revendications

1. Siège de véhicule avec
- un châssis inférieur de siège (U) définissant une surface de siège et un dossier (L), dans lequel le dossier (L) s'étend le long d'un axe longitudinal de dossier (B) et l'axe longitudinal de dossier (B) s'étend dans une position d'utilisation du dossier (L), dans laquelle une personne (P) peut prendre place sur le siège de véhicule (F) conformément à l'usage prévu, selon un angle de dossier par rapport à la surface de siège, et
- un dispositif d'entraînement avec une unité d'entraînement (1), qui permet une rotation, actionnée par une force extérieure, du dossier (L) se trouvant dans la position d'utilisation par rapport à son axe longitudinal de dossier (B), où un côté longitudinal de dossier du dossier (L) est incliné plus fortement vers l'arrière par rapport à un axe de pivotement (A) que l'autre côté longitudinal de dossier,
**caractérisé par**
au moins une unité de transmission (2) du dispositif d'entraînement pouvant être commutée, au moyen de laquelle un couple d'entraînement généré par l'unité d'entraînement (1) peut être réparti entre les côtés longitudinaux de dossier pour faire tourner le dossier (L) par rapport à son axe longitudinal de dossier (B).

2. Siège de véhicule selon la revendication 1, **caractérisé en ce que** le dossier (L) peut être pivoté au niveau du châssis inférieur de siège (U) autour de l'axe de pivotement (A) par rapport à la surface de siège et le dossier (L) est monté à cet effet de part et d'autre d'un axe central (B) du dossier (L) parallèle à l'axe longitudinal de dossier, au niveau du châssis inférieur de siège (U) de manière à pouvoir pivoter par l'intermédiaire de deux ferrures de dossier (D1, D2), dans lequel le dossier (L) est divisé par l'axe central (B) en deux côtés longitudinaux de dossier et un côté longitudinal de dossier du dossier (L) peut être pivoté autour de l'axe de pivotement (A) indépendamment de l'autre côté longitudinal par l'intermédiaire du dispositif d'entraînement.

3. Siège de véhicule selon la revendication 2, **caractérisé en ce que** le dispositif d'entraînement coopère avec les deux ferrures de dossier par l'intermédiaire d'au moins deux organes de transmission (3a, 3b), qui sont reliés respectivement à l'unité de transmission (2), pour transmettre par l'intermédiaire des organes de transmission (3a, 3b) une force d'ajustement aux ferrures de dossier (D1, D2) et pour permettre si besoin des ajustements indépendants les uns des autres, actionnés par une force extérieure, des côtés longitudinaux de dossier autour de l'axe de pivotement (A).

4. Siège de véhicule selon la revendication 3, **caractérisé en ce qu'**au moins un organe de transmission comprend un arbre transversal (3a, 3b), qui s'étend depuis l'unité de transmission (2) vers une ferrure de dossier (D1, D2).

5. Siège de véhicule selon l'une quelconque des revendications précédentes, **caractérisé en ce qu'**au choix
- les deux côtés longitudinaux de dossier peuvent être ajustés de manière synchrone ou seulement un côté longitudinal de dossier peut être ajusté seul ou
- les deux côtés longitudinaux de dossier peuvent être ajustés de manière synchrone ou les deux côtés longitudinaux peuvent être ajustés avec des vitesses de rotation différentes et/ou dans des directions de rotation différentes, ou
- les deux côtés longitudinaux de dossier peuvent être ajustés de manière synchrone, un seulement côté longitudinal de dossier peut être ajusté seul ou les deux côtés longitudinaux de dossier peuvent être ajustés avec des vitesses de rotation différentes et/ou dans des directions de rotation différentes
par l'intermédiaire de l'unité de transmission (2) pouvant être commutée.

6. Siège de véhicule selon l'une quelconque des revendications précédentes, **caractérisé en ce que** l'unité d'entraînement (1) est mise au point pour transmettre systématiquement à l'un des deux côtés longitudinaux de dossier une force d'ajustement et si besoin un couplage à l'autre côté longitudinal de dossier est effectué par l'intermédiaire de l'unité de transmission (2) de sorte que les deux côtés longitudinaux de dossier puissent être ajustés conjointement.

7. Siège de véhicule selon l'une quelconque des revendications 1 à 5, **caractérisé en ce que** l'unité d'entraînement (1) est mise au point pour transmettre aux deux côtés longitudinaux de dossier une force d'ajustement, et au moins un des deux côtés longitudinaux de dossier peut être découplé si besoin de l'unité d'entraînement (1) par l'intermédiaire de l'unité de transmission (2) de sorte qu'un couple d'entraînement de l'unité de transmission (1) ne conduise pas à un ajustement dudit côté longitudinal de dossier.

8. Siège de véhicule selon la revendication 7, **caractérisé en ce que** l'unité de transmission (2) est disposée au niveau d'un côté longitudinal de dossier et peut être commutée entre une position de transmission et une position de marche à vide de sorte que dans la position de transmission, une force d'ajustement, qui est transmise par l'unité de transmission (1) au côté longitudinal de dossier présentant l'unité de transmission (2) au moyen d'un organe de transmission (3a, 3b) du dispositif d'entraînement, conduise à un pivotement d'une partie latérale de dossier (L1, L2) du dossier (L) définissant ledit côté longitudinal de dossier, et que dans une position de marche à vide, un couple d'entraînement de l'unité d'entraînement (1) conduise uniquement à un ajustement de l'organe de transmission (3a, 3b) sans ajuster la partie latérale de dossier (L1, L2).

9. Siège de véhicule selon la revendication 7 ou 8, **caractérisé en ce qu'**au moins deux unités de transmission (2) sont prévues, qui sont associées à des côtés longitudinaux de dossier différents et sont mises au point respectivement pour découpler si besoin le côté longitudinal de dossier respectif de l'unité d'entraînement (1).

10. Siège de véhicule selon l'une quelconque des revendications précédentes, **caractérisé en ce que** l'unité de transmission (2) est disposée au niveau du siège de véhicule (F) de manière séparée spatialement de l'unité d'entraînement (1).

11. Siège de véhicule selon la revendication 10, **caractérisé en ce que** l'unité d'entraînement (1) est disposée au niveau d'un côté longitudinal de dossier et la transmission du couple d'entraînement ou d'une partie de celui-ci à l'autre côté longitudinal de dossier est possible seulement au-delà de l'unité de transmission (2).

12. Siège de véhicule selon l'une quelconque des revendications précédentes, **caractérisé en ce que** l'unité de transmission (2) est disposée entre deux parties latérales de dossier (L1, L2) du dossier (L).

13. Siège de véhicule selon l'une quelconque des revendications précédentes, **caractérisé en ce que** l'unité de transmission (2) est disposée au niveau d'un côté extérieur d'une partie latérale de dossier (L1, L2) du dossier (L).

14. Siège de véhicule selon l'une quelconque des revendications précédentes, **caractérisé en ce que** l'unité de transmission (2) comprend un embrayage à friction pouvant être commuté.
